# EUROPÄISCHE PATENTSCHRIFT

(11) **EP 3 122 617 B1**
(45) Veröffentlichungstag und Bekanntmachung des Hinweises auf die Patenterteilung: **23.10.2019**
(21) Anmeldenummer: 15708443.5
(22) Anmeldetag: 06.03.2015
(51) Int. Cl.: B62D 43/00, B62D 29/00, B62D 25/08, B62D 21/15

(54) **KRAFTFAHRZEUG UND HINTERWAGENMODUL HIERFÜR**
MOTOR VEHICLE AND REAR-END MODULE THEREFOR
VÉHICULE AUTOMOBILE ET MODULE DE CAISSE ARRIÈRE DESTINÉ À CELUI-CI

(30) Priorität: 22.03.2014 DE 102014004166
(43) Veröffentlichungstag der Anmeldung: 01.02.2017
(73) Patentinhaber: Audi AG, 85045 Ingolstadt (DE)
(72) Erfinder: LANGHOFF, Hans-Jürgen, 85101 Lenting (DE); RUGIES, Stefan, 85055 Ingolstadt (DE); URBAN, Tobias, 74354 Besigheim-Ottmarsheim (DE); DECKER, Dennis, 71726 Benningen (DE); ENDERLE, Sebastian, 74072 Heilbronn (DE); SCHLICHTER, Pascal, 85053 Ingolstadt (DE)
(74) Vertreter: Reichert, Thomas Klaus
(86) Internationale Anmeldenummer: PCT/EP2015/000513
(87) Internationale Veröffentlichungsnummer: WO 2015/144289

(56) Entgegenhaltungen:
- WO-A1-2006/114525
- US-A1- 2006 214 414
- US-A1- 2013 249 243

## Beschreibung

Die Erfindung betrifft ein Kraftfahrzeug nach dem Oberbegriff des Anspruchs 1 sowie ein Hinterwagenmodul hierfür nach dem Oberbegriff des Anspruchs 14.

Aus der DE102012205967 ist eine Tragstruktur-Baugruppe bekannt, welche zur Verbindung mit einem Kastenrahmen eines Kraftfahrzeugs vorgesehen ist, wobei Einzelkomponenten der Tragstruktur Aufnahmen für Fahrwerkskomponenten aufweisen.

Aus der DE102006040837A1 ist es bekannt, Lenker einer radführenden Mehrlenker-Anordnung mit ihrem dem zugeordneten Rad abgewandten Ende ohne Zwischenschaltung eines Hinterachsträgers direkt an einer Karosseriestruktur zu befestigen.

Aus der EP2114753 ist ein Achsträger für ein Kraftfahrzeug bekannt, bei dem Einrichtungen zur Aufnahme von Fahrwerkskomponenten als Gussteile ausgebildet sind und mittels einer Quertraverse ein linkes und ein rechtes Gussteil miteinander verbunden sind. Ein derartiger Achsträger wird mittels elastisch verformbarer Lagerungen analog zu einem Hilfsrahmen oder Hinterachsträger mit der Karosserie verschraubt.

Aus der JP2010-247622A ist eine Heckkarosseriestruktur bekannt geworden, bei der mittels karosserierohbauseitig vorgesehenen Hilfslängsträgern im Bereich der Reserveradmulde in Kombination mit einem während der Montage des Kraftfahrzeuges an der Karosserie befestigten Hilfsrahmen ein zu Karosserielängsträgern zusätzlicher, sekundärer Lastpfad ausgebildet wird. Bei einer derartigen Gestaltung eines Fahrzeughecks ist von Nachteil, dass der Sekundärlastpfad aus einem karosserierohbauseitig eingebrachten Träger und aus einem erst anschließend montierten Hinterachsträger zusammengesetzt ist. Der Hinterachsträger ist mittels Schraubverbindungen an der Karosserie angebunden. Hierdurch entstehen ungewollte Stufen entlang des Lastpfades, wobei die auftretenden Kräfte über die Schraubverbindungen übertragen werden müssen. Derartige Schraubverbindungen sind zum Zwecke des Toleranzausgleichs mit großem Radialspiel versehen, damit eine zuverlässige Montage der Hinterachsträger an der Karosserie gelingt. Hierdurch ist nicht immer sicher gestellt, dass im Falle eines Heckaufpralls Kräfte direkt über den Sekundärlastpfad in den Fahrzeugboden eingeleitet werden. Vielmehr kann es durch schlagartigen Kraftaufbau im Falle einer Kollision dazu kommen, dass zunächst die Schraubverbindungen innerhalb ihrer Schraublöcher in formschlüssigen Anschlag gebracht werden müssen um Kollisionskräfte zuverlässig übertragen zu können. Hierbei besteht die Gefahr, dass derartige Schraubverbindungen zerstört werden und eine zuverlässige Kraftübertragung nicht mehr gelingt. Des Weiteren ist eine derartig ausgestaltete Fahrzeugheckstruktur nicht im gewünschten Maße flexibel, das bedeutet, dass eventuelle Fahrzeugvarianten, die Auswirkungen auf den Rohbau haben, bereits in diesem Rohbaustadium mittels gesteuert eingebrachter Karosserieteile und entsprechend abgewandelter Fertigung im Karosserierohbau, beispielsweise geänderter Punktschweißfolge realisiert werden müssen.

Aus der US 2013/0249243 A1 ist eine Stützstruktur bekannt, welche Heck- oder Seitenaufprallkräfte, die auf ein Fahrzeugheck einwirken, auf heckseitige Karosserielängsträger verteilt.

Aus der WO 2006/114525 A1 ist eine Hinterwagenstruktur eines Kraftfahrzeuges bekannt, bei der in Fahrzeugquerrichtung gesehen, zwischen Hecklängsträgern zusätzlich Verstärkungen vorhanden sind.

Aus der US 2006/0214414 A1 ist ein Kraftfahrzeug mit den Merkmalen des Oberbegriffs des Anspruchs 1 bekannt.

Dem gegenüber stellt sich die Erfindung die Aufgabe, die Nachteile des Standes der Technik zu vermeiden und bei erhöhter Crashsicherheit karosserierohbauseitig gegenüber dem Stand der Technik einen weitergehenden Leichtbau des Fahrzeughecks zu ermöglichen. Des Weiteren soll die Erfindung die Aufgabe lösen, den erforderlichen Logistikaufwand und den erforderlichen Montageaufwand bei der Montage des Kraftfahrzeugs zu reduzieren und die Variantenzahl im Bereich des Karosserierohbaus verringern helfen.

Eine weitere Aufgabe der Erfindung ist es, eine in weiten Bereichen vormontierbare Unterbaugruppe für einen Hinterwagen eines Kraftfahrzeuges zu schaffen, welche es ermöglicht den Variantenreichtum von Karosserierohbaustrukturen in Abhängigkeit von Ausstattungsvarianten eines Kraftfahrzeugs beispielsweise in Abhängigkeit des vorhandenen Antriebs, z. B. Front-, Heck- oder Allradantrieb, der vorhandenen Antriebsart, z. B. mittels Verbrennungsmotor, Elektromotor oder eines Hybridantriebes und/oder in Abhängigkeit von unterschiedlichen Ausstattungsvarianten zu reduzieren.

Diese Aufgaben werden mit einem Kraftfahrzeug mit den Merkmalen des Anspruchs 1 gelöst. Vorteilhafte Ausführungsformen sind in den vom Anspruch 1 abhängigen Unteransprüchen angegeben.

Des Weiteren wird insbesondere die letztgenannte Aufgabe durch ein Hinterwagenmodul mit den Merkmalen des Anspruchs 14 gelöst. Vorteilhafte Ausführungsformen sind in den vom Anspruch 14 abhängigen Ansprüchen angegeben.

Ein erfindungsgemäßes Kraftfahrzeug besitzt eine Karosserie, welche zumindest zwei hintere, jeweils einen primären Lastpfad für Kollisionskräfte bildende, insbesondere rohbauseitige Längsträger aufweist. Das Kraftfahrzeug besitzt ein als Unterbaugruppe vormontierbares Hinterwagenmodul, welches nach Fertigstellung des Karosserierohbaus im Rahmen der Fahrzeugmontage mit der Karosserie verbindbar ist. Das Kraftfahrzeug ist gekennzeichnet durch je Fahrzeugseite zumindest eine Tragstruktur zum Befestigen von Fahrwerkskomponenten einer hinteren Radaufhängung und eine sich von der Tragstruktur zum Kfz-Heck hin erstreckende Trägerstruktur zur Aufnahme von Kollisionskräften, wobei die Tragstruktur zusammen mit der Trägerstruktur je Fahrzeugseite zumindest einen Sekundärlastpfad für Kollisionskräfte, insbesondere für heckseitige Kollisionskräfte bilden. Weiterhin ist ein in Fahrtrichtung vorderer Endbereich der Tragstruktur mit einer zweiten Trägerstruktur lösbar verbindbar, wobei die zweite Trägerstruktur sich in Fahrtrichtung nach vorne erstreckt und an ihrem vorderen Endbereich mit einer Bodenstruktur einer Fahrgastzelle der Karosserie verbindbar ist, sodass der Sekundärlastpfad vom Fahrzeugheck bis in den Unterboden der Karosserie reichend vervollständigt ausgebildet ist.

Zweckmäßig ist, dass die zumindest eine Tragstruktur und die zumindest eine Trägerstruktur je Fahrzeugseite in Fahrzeugquerrichtung mittels zumindest einer Quertraverse miteinander verbunden sind.

Zweckmäßiger Weise weist das Hinterwagenmodul eine wannenartige Bodenstruktur auf, welche zur Aufnahme von vorbestimmten Zusatzaggregaten, z. B. eines Gastanks, Batterien oder Akkumulatoren, einee Reserverades, Steuergeräten oder Fahrzeugvarianten bildenden Ausrüstungen ausgebildet ist.

Die Trägerstruktur ist dabei vorteilhafter Weise als im Querschnitt kastenförmiger oder rohrförmiger Träger nach Art eines Längsträgers ausgebildet. Sie können gleichwohl aber auch als schalenartiger offener Träger, insbesondere eine Schalenstruktur zur Aufnahme einer Gasflasche umgreifend ausgebildet sein.

Die Tragstruktur weist zweckmäßiger Weise Aufnahmen zur Befestigung von Fahrwerkskomponenten, insbesondere von Fahrwerkslenkern, Stabilisatoren, Spurstangen, Feder- und/oder Dämpferelementen auf.

Es hat sich als vorteilhaft erwiesen, die Tragstrukturen als Druckgussbauteile, insbesondere aus Aluminium oder einer Aluminiumlegierung auszubilden. Gleichwohl kann die Tragstruktur auch als Schweißkonstruktion aus Stahlblechformteilen ausgebildet sein.

Um eine karosserieversteifende Wirkung zu erzielen ist es vorteilhaft, das Hinterwagenmodul mit der Karosserie zumindest teilweise unlösbar, beispielsweise mittels einer Klebung, zu verbinden.

Zur Anbindung eines Hinterachsgetriebes, beispielsweise für ein heck- oder allradgetriebenes Fahrzeug weist das Hinterwagenmodul Einrichtungen zur Befestigung des Hinterachsgetriebes auf.

Um zeitgemäße Anforderungen hinsichtlich der Heckcrashsicherheit zu erfüllen empfiehlt es sich, den oder die Sekundärlastpfade in Fahrzeugquerrichtung gesehen zwischen den Längsträgern der Karosserie, also den primären Lastpfaden, anzuordnen.

Für den gleichen Zweck ist es sinnvoll, die Sekundärlastpfade, insbesondere die Trägerstruktur in einer Fahrzeughochrichtung gesehen unterhalb der Karosserielängsträger, die den primäreren Lastpfad bilden, oder zumindest bezüglich der Karosserielängsträger nach unten versetzt anzuordnen.

Zweckmäßig ist es, die Tragstruktur mittels Zug-/Druckstreben mit Bestandteilen des primären Lastpfades, z. B. dem Längsträger oder einem Seitenschweller der Karosserie oder einem oder mehreren Bodenlängsträgern im Bereich des Bodens einer Fahrgastzelle zu verbinden.

Um die im Falle eines Heckaufpralls entstehenden Aufprallkräfte möglichst direkt über den Sekundärlastpfad in dem Fahrzeugunterboden einleiten zu können, ist das Hinterwagenmodul zweckmäßiger Weise mit der Fahrzeugkarosserie starr verbunden.

Zur Anpassung des Hinterwagenmoduls an unterschiedliche Fahrzeugausstattungen ist die Bodenstruktur des Hinterwagenmoduls z. B. als Reserveradmulde oder als Aufnahmeeinrichtung für eine Gasflasche oder andere Ausrüstungen des Fahrzeugs, z. B. Steuergeräte oder Akkumulatoren ausgebildet.

Die Aufgaben der Erfindung werden ebenfalls gelöst durch ein Hinterwagenmodul für eine Karosserie eines Kraftfahrzeuges, wobei das Hinterwagenmodul je Fahrzeugseite eine Tragstruktur zum Befestigen von Fahrwerkskomponenten einer hinteren Radaufhängung und eine sich von der Tragstruktur im Einbauzustand des Hinterwagenmoduls in der Karosserie zum Kfz-Heck hin erstreckende Trägerstruktur zur Aufnahme von Kollisionskräften aufweist, wobei die Tragstruktur zusammen mit derTrägerstruktur im Einbauzustand je Fahrzeugseite zumindest einen Lastpfad zur Aufnahme und/oder Weiterleitung von Kollisionskräften, z. B. verursacht durch einen Heckaufprall, bilden. Die Tragstruktur ist mit einer zweiten Trägerstruktur lösbar verbindbar, wobei die zweite Trägerstruktur sich in Fahrtrichtung nach vorne erstreckt und an ihrem Endbereich mit einer Bodenstruktur einer Fahrgastzelle der Karosserie verbunden ist, wobei der Lastpfad als Sekundärlastpfad bis in den Unterboden der Karoserie reichend vervollständigbar ist.

Weitere vorteilhafte Ausgestaltungen des Hinterwagenmoduls sind in den Ansprüchen 15 bis 25 angegeben.

Im Folgenden wird die Erfindung anhand der Zeichnungen beispielhaft näher erläutert.

Es zeigen:
- Figur 1:: eine erste Ausführungsform einer Heckkarosseriestruktur eines erfindungsgemäßen Kraftfahrzeuges mit einem erfindungsgemäßen Hinterwagenmodul in perspektivischer Explosionsdarstellung;
- Figur 2:: eine perspektivische Draufsicht auf eine zweite Ausführungsform einer Heckkarosseriestruktur eines erfindungsgemäßen Kraftfahrzeuges enthaltend eine zweite Ausführungsform des erfindungsgemäßen Hinterwagenmoduls im montierten Zustand;
- Figur 3:: eine perspektivische Unteransicht auf die zweite Ausführungsform gemäß Figur 2;
- Figur 4:: eine perspektivische Draufsicht auf eine dritte Ausführungsform einer Heckkarosseriestruktur des erfindungsgemäßen Fahrzeuges enthaltend eine dritte Ausführungsform des erfindungsgemäßen Hinterwagenmoduls im montierten Zustand;
- Figur 5:: eine perspektivische Unteransicht auf die dritte Ausführungsform gemäß Figur 4.

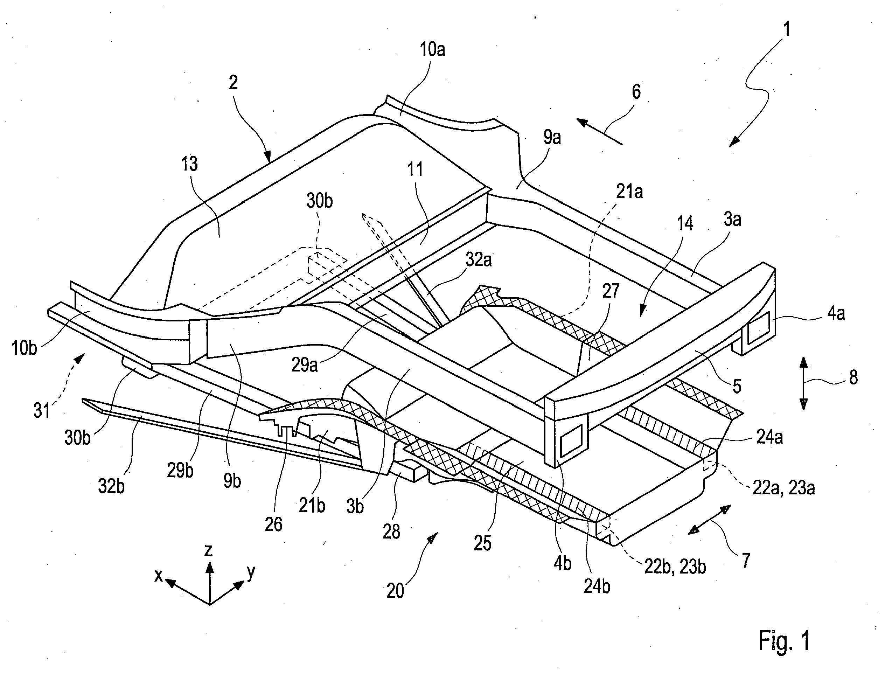

Ein erfindungsgemäßes Kraftfahrzeug 1 besitzt eine Karosserie 2. In den Figuren 1 bis 5 ist im Folgenden lediglich eine Teilstruktur, insbesondere eine Heckkarosseriestruktur einer solchen Karosserie 2 gezeigt. Die Karosserie 2 besitzt zwei hintere Längsträger 3a, 3b, welche Teil der Karosserierohbaustruktur sind. Die Längsträger 3a, 3b sind beispielsweise kastenförmig aufgebaut und weisen jeweils ein heckseitiges Ende 4a, 4b auf. Im Bereich der heckseitigen Enden 4a, 4b sind die Längsträger 3a, 3b mittels eines Heckquerträgers 5 verbunden.

Für die weitere Beschreibung ist die mit einem Pfeil 6 angedeutete Richtung die Fahrtrichtung des Fahrzeuges oder die Fahrzeuglängsachse (x-Achse). Mit dem Doppelpfeil 7 ist die Fahrzeugquerrichtung angedeutet. Die Fahrzeugquerrichtung entspricht dabei üblicher Weise einer y-Richtung. Mit dem Doppelpfeil 8 ist eine Fahrzeughochrichtung (z-Richtung) angedeutet. An einem in Fahrtrichtung 6 vorderen Ende gehen die Längsträger 3a, 3b über Übergangsträger 9a, 9b in Seitenschweller 10a, 10b über. In einem Übergangsbereich zwischen den Längsträgern 3a, 3b und den Übergangsträgern 9a, 9b ist ein weiterer Querträger 11, die Längsträger 3a, 3b und/oder die Übergangsträger 9a, 9b verbindend, angeordnet. In Fahrtrichtung 6 gesehen vor dem Querträger 11 ist ein sogenannter Tankboden 13 angeordnet, unterhalb dem Raum für beispielsweise einen Kraftstofftank vorgesehen ist. Der Tankboden 13 trennt den Karosserieinnenraum vom Tank ab.

Die vorbeschriebene Karosserie 2, insbesondere der vorgeschriebene Heckkarosseriebereich wird im Rahmen des Karosserierohbaus, das heißt üblicher Weise aus Schweißgruppen im Karosserierohbau gefügt. Wie aus vorangehender Beschreibung hervorgeht, weist ein derartiger Karosserierohbau im Bereich des Fahrzeughecks noch keinerlei Aufnahmen für Fahrwerkskomponenten auf. Auch besitzt ein derartiger Heckkarosseriebereich der Karosserie 2 keine Kofferraumbodenstruktur, viel mehr ist zwischen den Längsträgern 3a und 3b in Fahrzeugquerrichtung gesehen wie auch zwischen dem Heckquerträger 5 und dem weiteren Querträger 11 in Fahrzeuglängsrichtung gesehen eine Öffnung 14 vorgesehen. Diese Öffnung 14, welche bei Karosseriestrukturen gemäß dem Stand der Technik üblicher Weise mit einem Kofferraumboden, beispielsweise einer Reserveradwanne bereits im Rohbau verschlossen wird, bleibt bei einem Kraftfahrzeug 1 gemäß der Erfindung rohbauseitig offen.

Das erfindungsgemäße Kraftfahrzeug 1 besitzt weiterhin ein als Unterbaugruppe vormontierbares Hinterwagenmodul 20. Ein solches Hinterwagenmodul 20 besitzt je Fahrzeugseite zumindest eine Tragstruktur 21a, 21b zur Aufnahme von Fahrwerkskomponenten. Des Weiteren besitzt das Hinterwagenmodul 20 eine sich von den Tragstrukturen 21a, 21b zum Kraftfahrzeugheck hin erstreckende Trägerstruktur 22a, 22b. Dabei sind die Trägerstrukturen 22a, 22b nach Art eines Längsträgers kastenartig aufgebaut und bilden zusammen mit den korrespondierenden Tragstrukturen 21a, 21b zumindest einen Sekundärlastpfad für Kollisionskräfte, die beispielsweise im Falle eines Heckaufpralls in die Karosserie eingetragen werden. Die Trägerstrukturen 22a, 22b weisen ebenfalls ein fahrzeugheckseitiges Ende 23a, 23b auf. Die heckseitigen Enden 23a, 23b sind dabei in Fahrzeuglängsrichtung 6 gesehen etwa auf gleicher Höhe wie die heckseitigen Enden 4a, 4b der Längsträger 3a, 3b angeordnet. In Fahrzeugquerrichtung 7 gesehen sind die Trägerstrukturen 22a, 22b bevorzugt innerhalb der Längsträger 3a, 3b angeordnet. Die Trägerstrukturen 22a, 22b verlaufen dabei vom heckseitigen Ende 23b parallel oder nahezu parallel zu den Längsträgern 3a, 3b in Fahrzeuglängsrichtung 6 nach vorne und münden dort in die Tragstruktur 21a, 21b.

Der Längsverlauf der Trägerstrukturen 22a, 22b ist mittels der Schraffuren 24a, 24b schematisch angedeutet. Am in Fahrtrichtung 6 vorderen Ende der Schraffuren 24a, 24b sind die Trägerstrukturen 22a, 22b fest, d. h. unlösbar mit den Tragstrukturen 21a, 21b verbunden. Hierfür eignet sich beispielsweise eine Schweißung, Klebung oder dergleichen im Karosseriebau bekannte Verbindungsart. In Fahrzeugquerrichtung 7 gesehen sind jeweils eine Tragstruktur 21a und eine Trägerstruktur 22a sowie die gegenüberliegende Tragstruktur 21b und eine korrespondierende Trägerstruktur 22b beispielsweise mit einem wannenartigen Bodensegment 25 verbunden.

Die Tragstrukturen 21a, 21b weisen bevorzugt eine Vielzahl von Aufnahmeeinrichtungen 26 für die Befestigung von Fahrwerkskomponenten auf. In der Figur 1 ist hierbei beispielshaft eine Aufnahme für einen Querlenker gezeigt (Bezugszeichen 26). Gegebenenfalls, d. h. insbesondere wenn es Festigkeitsanforderungen oder andere Anforderungen erfordern, besitzt das Hinterwagenmodul 20 einen oder mehrere Modulquerträger 27.

Im Ausführungsbeispiel gemäß Figur 1 bilden die Tragstrukturen 21a, 21b die Trägerstrukturen 22a, 22b, das wannenartige Bodensegment 25 sowie der Modulquerträger 27 das als Unterbaugruppe vormontierbare Hinterwagenmodul 20. Dabei sind Anschlussflächen (Kreuzschraffur in Figur 1) des Hinterwagenmoduls 20 zur festen, insbesondere flächigen Verbindung des Hinterwagenmoduls 20 mit dem Heckbereich der Karosserie 2 ausgebildet. Eine derartige Verbindung kann beispielsweise als Klebung oder als Kombination aus Verschraubung und Verklebung ausgebildet sein und ist insbesondere starr ausgebildet. Unter "starr" in diesem Zusammenhang ist zu verstehen, dass, abgesehen von Elastizitäten der festen Verbindung, welche unvermeidbar sind, jedenfalls keine zusätzlichen Maßnahmen ergriffen sind, die eine elastische Anbindung des Hinterwagenmoduls 20 an der Karosserie 2 erzeugen. Es soll ein möglichst steifer Verbund zwischen dem Hinterwagenmodul und der Karosserie 2 hergestellt werden, um zu ermöglichen, dass die Trägerstrukturen 22a, 22b über die Tragstrukturen 21a, 21b Heckaufprallkräfte möglichst direkt und ungedämpft in die Karosserie 2 einleiten können. Hierbei hilft eine möglichst großflächige, starre Anbindung, beispielsweise eine Klebung des Hinterwagenmoduls 20 an der Karosserie 2.

Erfindungsgemäß sind direkt am Hinterwagenmodul 20, insbesondere an den Tragstrukturen 21a, 21b, welche in besonders vorteilhafter Weise als Druckgussbauteile, beispielsweise aus Aluminium oder einer Aluminiumlegierung hergestellt sind, mehrere Aufnahmen 26 für Fahrwerkskomponenten angeordnet. Ein separater Hinterachsträger, wie er üblicherweise im Stand der Technik eingesetzt wird, kann somit entfallen. Gleichwohl ist es auch selbstverständlich möglich, die Tragstrukturen 21a, 21b als Schweißkonstruktion aus Blechen, z. B. Blechformteilen auszuführen. Vorteilhafter Weise weist das Hinterwagenmodul 20, insbesondere im Bereich der Tragstrukturen 21a, 21b eine weitere Aufnahme 28 auf, mit der eine zweite Trägerstruktur 29a, 29b mit dem Hinterwagenmodul 20 vorteilhafter Weise lösbar verbindbar ist. Die zweiten Trägerstrukturen 29a, 29b sind dabei vorteilhafter als Zug-/ Druckstreben ausgebildet, welche mit ihren vorderen Ende 30a, 30b im Bereich einer Bodenstruktur 31, insbesondere im Bereich des hinteren Endes der Schweller 10a, 10b mit der Karosserie 2 verbindbar sind. Diese Verbindung ist in vorteilhafter Weise als lösbare Verbindung ausgebildet. Das Vorsehen der zweiten Tragstrukturen 29a, 29b ermöglicht es, insbesondere den für den Kraftstofftank vorgesehenen Bauraum unterseitig zu überbrücken und vom sekundären Lastpfad aufgenommene Kollisionskräfte direkt in die Bodenstruktur 31 der Karosserie 2, insbesondere deren Fahrgastzelle oder dort vorhandene Bodenlängsträger einzuleiten.

Gegebenenfalls kann es noch sinnvoll sein zusätzlich zu der zweiten Trägerstruktur 29a, 29b in Fahrzeuglängsrichtung 6 von den Tragstrukturen 21a, 21b ausgehend schräg nach außen laufend zusätzliche Zug-/Druckstreben 32a, 32b vorzusehen. Die Druckstreben 32a, 32b können an in Fahrzeugquerrichtung 7 gesehen weiter außen liegenden Knotenpunkten zum Beispiel im Bereich der Schweller 10a, 10b mit der Rohbaukarosserie 2 verbunden sein.

Bei der Erfindung ist von besonderem Vorteil, dass das gesamte Hinterwagenmodul bestehend zumindest aus den Tragstrukturen 21a, 21b, den Trägerstrukturen 22a, 22b und gegebenenfalls einem oder mehreren Modulquerträgern 27 sowie einer Bodenstruktur 25 vollständig als im Rahmen der Fahrzeugmontage montierbare Unterbaugruppe unabhängig vom Karosserierohbau hergestellt werden kann. Das Hinterwagenmodul 20 kann dabei, z. B. durch angepasste Gestaltung des Bodensegments 25 an unterschiedliche Anforderungen des Kraftfahrzeugs 1 angepasst werden. So ist es beispielsweise möglich, das Bodensegment 25 als Reserveradmulde auszubilden. Gleichwohl können aber auch andere Verwendungszwecke realisiert werden. So können beispielsweise Aufnahmen für Steuergeräte, Akkumulatoren, Gasflaschen oder anderweitige Tanks vorgesehen sein. Somit gelingt es mittels eines erfindungsgemäßen Hinterwagenmoduls 20 eine Vielzahl von Fahrzeugvarianten, die gemäß dem Stand der Technik im Karosserierohbau mittels gesteuerter Blechteile bzw. gesteuerter Fertigungsabfolgen realisiert werden müssten, als Montagelösung bereit zu stellen. Der Karosserierohbau und die damit verbundene aufwändige Logistik wird somit vereinfacht. Das Hinterwagenmodul 20 kann angepasst an das Fahrzeug separat, z. B. als zulieferbare Montagebaugruppe hergestellt werden und in einen "standardisierten" Karosserierohbau in einem Montageschritt montiert werden. Gleichzeitig ermöglicht das erfindungsgemäße Hinterwagenmodul 20 die Ausbildung eines sekundären Lastpfades, der im fertig aufgebauten Kraftfahrzeug 1 ergänzend zu den primären Lastpfaden bestehend aus den rohbauseitigen Längsträgern 3a, 3b, den Übergangsträgern 9a, 9b sowie den Seitenschwellern 10a, 10b angeordnet werden kann. Somit stellt das erfindungsgemäße Hinterwagenmodul 20 nicht nur eine Montagebaugruppe dar, sondern es kann vielmehr mittels der Ausgestaltung des Hinterwagenmoduls 20 explizit Einfluss auf Karosseriesteifigkeiten und Crasheigenschaften des Fahrzeughecks Einfluss genommen werden. Insbesondere durch die Möglichkeit, das Hinterwagenmodul flächig mit dem Karosserierohbau zu verbinden, gelingt eine wesentliche Verbesserung der Gesamtkarosseriesteifigkeit.

Dabei ist insbesondere von besonderem Vorteil, dass die Trägerstrukturen 22a, 22b des Hinterwagenmoduls 20 direkt mit den Tragstrukturen 21a, 21b zusammenwirken, was im Unterschied zum Stand der Technik, bei dem beispielsweise ein Hinterachsträger mit einer Sekundärlastpfadstruktur verschraubt wird, eine deutlich verbesserte Kollisionskraftübertragung ermöglicht.

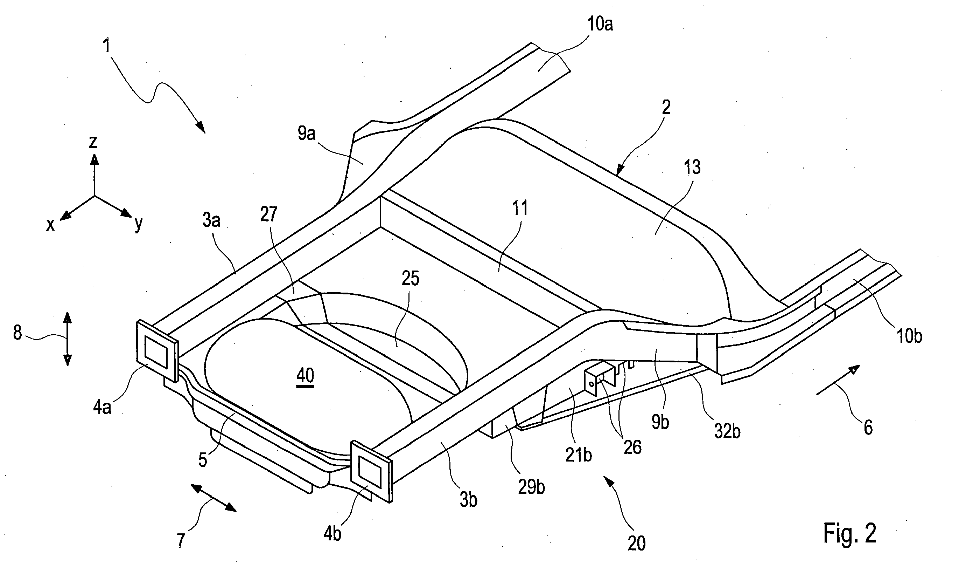

Bei den nachfolgend im Zusammenhang mit den Figuren 2 bis 5 beschriebenen beiden Ausführungsformen ist das Hinterwagenmodul 20 im montierten Zustand bezüglich der Fahrzeugkarosserie 2 gezeigt. In Figur 1 hingegen ist das Hinterwagenmodul 20 in Fahrzeughochrichtung 8 abgesenkt nach Art einer Explosionsdarstellung gezeigt.

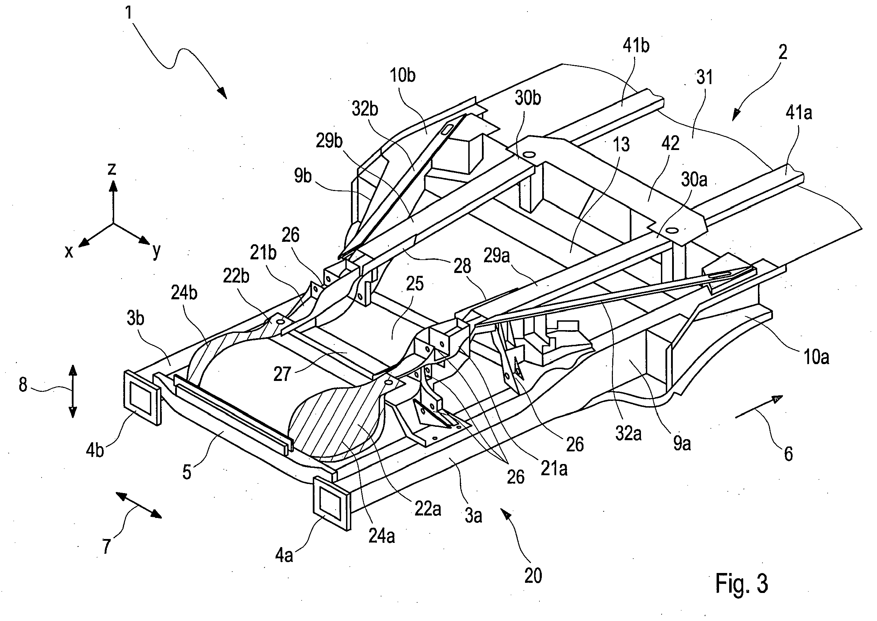

Das Ausführungsbeispiel gemäß der Figuren 2, 3 zeigt eine Variante der Erfindung, bei der das Hinterwagenmodul 20 eine Aufnahmeeinrichtung 40 beispielsweise für eine Gasflasche zur Versorgung eines mit Gas betriebenen Verbrennungsmotors aufweist. In einem solchen Fall bietet es sich an, die Trägerstrukturen 22a, 22b als schalenartige Träger, den Bauraum für die Gasflasche umgebend oder umschmiegend, auszuführen. Ein derartiger schalenartiger Träger kann beispielsweise eine in Fahrzeuglängsrichtung 6 steif ausgeformte Schalenstruktur bzw. Blechdopplung sein. Der übrige Aufbau der Ausführungsvariante gemäß Figur 2 und 3 entspricht dem prinzipiellen Aufbau, wie er am Ausführungsbeispiel gemäß Figur 1 erläutert wurde. Gleiche Bezugszeichen bezeichnen diesbezüglich auch gleiche Bestandteile der Ausführungsform. Die Merkmale, die im Zusammenhang mit Figur 1 beschrieben wurden, sind demnach auch ohne weiteres auf die Ausführungsbeispiele gemäß Figuren 2, 3, 4, 5 übertragbar.

Ergänzend zu der Ausführungsform gemäß Figur 1 ist in Figur 3, welche eine Unteransicht darstellt, gezeigt, dass die zweiten Trägerstrukturen 29a, 29b mit ihren vorderen Enden 30a, 30b im Unterbodenbereich der Bodenstruktur 31 mit der Fahrzeugkarosserie 2 lösbar befestigt sind, wobei bevorzugt in einer Verlängerung der zweiten Trägerstruktur 29a, 29b in Fahrzeuglängsrichtung 6 bzw. der Fahrtrichtung 6 sich entlang des Unterbodens verlaufende Trägerstrukturen 41a, 41 b (sogenannte Bodenlängsträger) anschließen. Bei Bedarf kann ohne weiteres ein vorzugsweise lösbar befestigter zusätzlicher Querträger 42 vorgesehen, welcher Befestigungspunkte der zweiten Trägerstruktur 29a, 29b im Bereich der Bodenstruktur 31 in Fahrzeugquerrichtung 7 überbrückend angeordnet ist und diese versteift und insbesondere auch zur Versteifung eines dort üblicherweise angeordneten Karosserietunnels beiträgt.

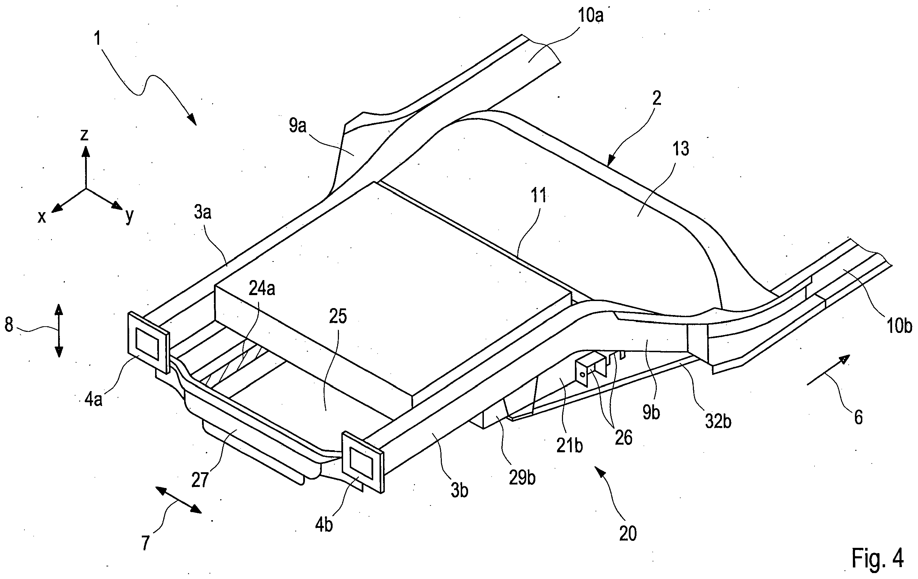

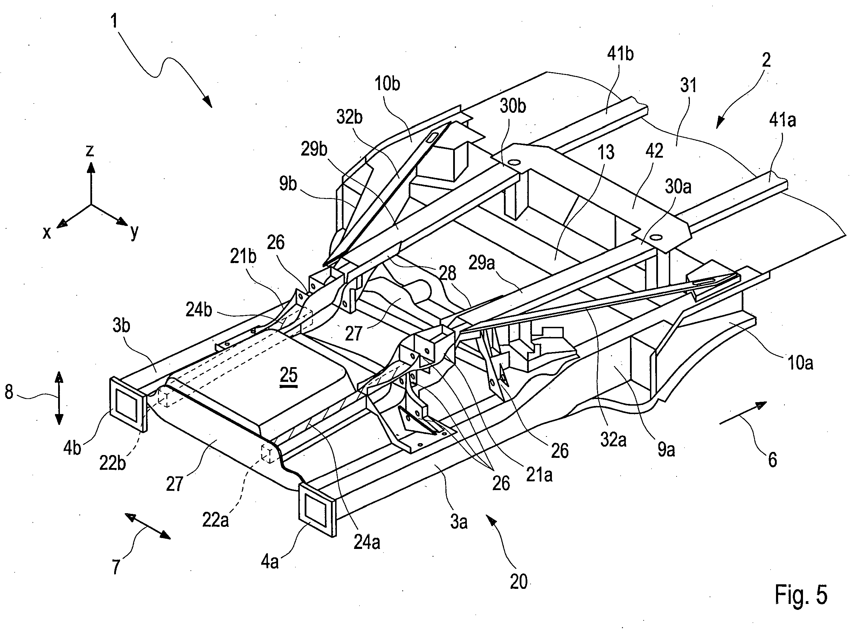

In einem weiteren Ausführungsbeispiel gemäß den Figuren 4 und 5 ist das Bodensegment 25 als Reserveradmulde ausgebildet und durch einen Modulquerträger 27 heckseitig abgeschlossen. Zwischen den Längsträgern 3a, 3b des Karosserierohbaus ist schematisch ein Platzhalter für diverse Zusatzaggregate, beispielsweise Pumpen, Filter, Akkumulatoren oder der Gleichen dargestellt, die bereits vormontiert mit den Hinterwagenmodul 20 ausgebildet sind und in einem Montageschritt mit dem Karosserierohbau verbindbar sind.

### Bezugszeichenliste

- 1: Kraftfahrzeug
- 2: Karosserie
- 3a, 3b: Längsträger
- 4a, 4b: heckseitiges Ende
- 5: Heckquerträger
- 6: Pfeil
- 7: Doppelpfeil
- 8: Doppelpfeil
- 9a, 9b: Übergangsträger
- 10a, 10b: Schweller
- 11: Querträger

- 13: Tankboden
- 14: Öffnung

- 20: Hinterwagenmodul
- 21a, 21b: Tragstrukur
- 22a, 22b: Trägerstruktur
- 23a, 23b: Ende
- 24a, 24b: Schraffur
- 25: wannenartiges Bodensegment
- 26: Aufnahme
- 27: Modulquerträger
- 28: weitere Aufnahme
- 29a, 29b: zweite Trägerstruktur
- 30: vorderes Ende
- 31: Bodenstruktur
- 32a, 32b: Zug-/ Druckstreben

## Patentansprüche

1. Kraftfahrzeug mit einer Karosserie (2), welche zumindest zwei hintere, jeweils einen primären Lastpfad für Kollisionskräfte bildende Längsträger (3a, 3b) aufweist, wobeidas Kraftfahrzeug (1) ein als Unterbaugruppe vormontierbares Hinterwagenmodul (20) besitzt, welches nach Fertigstellung des Karosserierohbaus im Rahmen der Fahrzeugmontage mit der Karosserie (2) verbindbar ist wobei das Hinterwagenmodul (20) je Fahrzeugseite zumindest eine Tragstruktur (21a, 21b) zum Befestigen von Fahrwerkskomponenten einer hinteren Radaufhängung und eine sich von der Tragstruktur (21a, 21b) zum Kfz-Heck hin erstreckende Trägerstruktur (22a, 22b) zur Aufnahme von Kollisionskräften aufweist, **dadurch gekennzeichnet, dass** die Tragstruktur (21a, 21b) zusammen mit der Trägerstruktur (22a, 22b) je Fahrzeugseite zumindest einen Sekundärlastpfad für Kollisionskräfte bilden und die Tragstruktur (21a, 21b) mit einer zweiten Trägerstruktur (29a, 29b) lösbar verbindbar ist, wobei die zweite Trägerstruktur (29a, 29b) sich in einer Fahrtrichtung (6) nach vorne erstreckt und an ihrem vorderen Endbereich (30a, 30b) mit einer Bodenstruktur (31) einer Fahrgastzelle der Karosserie (2) verbunden ist und der Sekundärlastpfad bis in die Bodenstruktur (31) der Karosserie (2) reichend vervollständigt ausgebildet ist.

2. Kraftfahrzeug nach Anspruch 1,
**dadurch gekennzeichnet, dass**
die zumindest eine Tragstruktur (21a, 21b) und die zumindest eine Trägerstruktur (22a, 22b) je Fahrzeugseite miteinander in Fahrzeugquerrichtung (7) mittels zumindest einem Modulquerträger (27) verbunden sind.

3. Kraftfahrzeug nach Anspruch 1 oder 2,
**dadurch gekennzeichnet, dass**
das Hinterwagenmodul (20) eine wannenartige Bodenstruktur (25) aufweist, welche zur Aufnahme von vorbestimmten Zusatzaggregaten, z. B. eines Gastanks, Batterien oder Akkumulatoren, eines Reserverades, Steuergeräten oder Fahrzeugvarianten bildenden Ausrüstungen ausgebildet ist.

4. Kraftfahrzeug nach einem der vorangegangenen Ansprüche,
**dadurch gekennzeichnet, dass**
die Trägerstruktur (22a, 22b) als kastenförmiger oder rohrförmiger Träger nach Art eines Längsträgers ausgebildet ist.

5. Kraftfahrzeug nach einem der vorangehenden Ansprüche,
**dadurch gekennzeichnet, dass**
die Trägerstruktur (22a, 22b) als schalenartiger Träger zur Aufnahme einer Gasflasche diese umgreifend ausgebildet ist.

6. Kraftfahrzeug nach einem der vorangehenden Ansprüche,
**dadurch gekennzeichnet, dass**
die Tragstrukturen (21a, 21b) Aufnahmen (26) zur Befestigung von Fahrwerkskomponenten, insbesondere Fahrwerkslenkern, Stabilisatoren, Spurstangen, Feder- oder Dämpferelementen, Lenkungsstellern oder aktiven Systemen zur Wankunterdrückung und Niveauregulierung aufweist.

7. Kraftfahrzeug nach einem der vorangehenden Ansprüche,
**dadurch gekennzeichnet, dass**
die Tragstrukturen (22a, 22b) als Druckgussbauteile, insbesondere aus Aluminium oder einer Aluminiumlegierung ausgebildet sind.

8. Kraftfahrzeug nach einem der vorangehenden Ansprüche,
**dadurch gekennzeichnet, dass**
das Hinterwagenmodul (20) mit der Karosserie (2) zumindest teilweise unlösbar, beispielsweise mittels einer Klebung verbunden ist.

9. Kraftfahrzeug nach einem der vorangehenden Ansprüche,
**dadurch gekennzeichnet, dass**
das Hinterwagenmodul (20) Einrichtungen zur Befestigung eines Hinterachsgetriebes aufweist.

10. Kraftfahrzeug nach einem der vorangehenden Ansprüche,
**dadurch gekennzeichnet, dass**
die Sekundärlastpfade in Fahrzeugquerrichtung (7) gesehen zwischen den Längsträgern (3a, 3b) der Karosserie (2) angeordnet sind.

11. Kraftfahrzeug nach einem der vorangehenden Ansprüche,
**dadurch gekennzeichnet, dass**
die Trägerstruktur (22a, 22b) in einer Fahrzeughochrichtung (8) gesehen unterhalb der Karosserielängsträger (3a, 3b) oder zumindest bezüglich der Karosserielängsträger (3a, 3b) nach unten versetzt angeordnet sind.

12. Kraftfahrzeug nach einem der vorangehenden Ansprüche,
**dadurch gekennzeichnet, dass**
die Tragstruktur (21a, 21b) mittels Zug-/Druckstreben (29a, 29b) mit Bestandteilen des primären Lastpfads z. B. dem Längsträger (3a, 3b) oder einem Seitenschweller (10a, 10b) der Karosserie (2) verbunden ist.

13. Kraftfahrzeug nach einem der vorangehenden Ansprüche,
**dadurch gekennzeichnet, dass**
das Hinterwagenmodul (20) mit der Karosserie (2) starr verbunden ist.

14. Hinterwagenmodul für eine Karosserie (2) eines Kraftfahrzeuges (1), insbesondere zur Ausbildung eines Kraftfahrzeugs nach einem der Ansprüche 1-15das Hinterwagenmodul (20) je Fahrzeugseite eine Tragstruktur (21a, 21b) zum Befestigen von Fahrwerkskomponenten einer hinteren Radaufhängung und eine sich im Einbauzustand des Hinterwagenmoduls (20) in der Karosserie (2)von der Tragstruktur (21a, 21b) zum Kfz-Heck hin erstreckende Trägerstruktur (22a, 22b) zur Aufnahme von Kollisionskräften aufweist, wobei die Tragstruktur (21a, 21b) zusammen mit der Trägerstruktur (22a, 22b) im Einbauzustand je Fahrzeugseite zumindest einen Lastpfad zur Aufnahme und/oder Weiterleitung von Kollisionskräften bilden und die Tragstruktur (21a, 21b) mit einer zweiten Trägerstruktur (29a, 29b) lösbar verbindbar ist, wobei die zweite Trägerstruktur (29a, 29b) sich in Fahrtrichtung (6) nach vorne erstreckt und an ihrem Endbereich (30a, 30b) mit einer Bodenstruktur (31) einer Fahrgastzelle der Karosserie (2) verbindbar ist, wobei der Lastpfad als Sekundärlastpfad bis in den Unterboden der Karosserie (2) reichend vervollständigbar ist.

15. Hinterwagenmodul nach Anspruch 14,
**dadurch gekennzeichnet, dass**
der zumindest eine Lastpfad im Einbauzustand des Hinterwagenmoduls (20) in Fahrzeugquerrichtung (7) gesehen zwischen den Längsträgern (3a, 3b) der Karosserie (2) anordenbar ist.

16. Hinterwagenmodul nach einem der Ansprüche 14 oder 15,
**dadurch gekennzeichnet, dass**
im Einbauzustand des Hinterwagenmoduls (20) die Sekundärlastpfade, insbesondere die Trägerstruktur (22a, 22b) in einer Fahrzeughochrichtung (8) gesehen unterhalb der Karosserielängsträger (3a, 3b) oder zumindest bezüglich der Karosserielängsträger (3a, 3b) nach unten versetzt anordenbar ist.

17. Hinterwagenmodul nach einem der Ansprüche 14 bis 16,
**dadurch gekennzeichnet, dass**
die Tragstruktur (21a, 21b) des Hinterwagenmoduls (20) im Einbauzustand mittels Zug-/ Druckstreben (32a; 32b) mit Bestandteilen des primären Lastpfades, z. B. dem Längsträger (3a, 3b) oder einem Seitenschweller (10a, 10b) der Karosserie (2) verbindbar ist.

18. Hinterwagenmodul nach einem der Ansprüche 14 bis 17,
**dadurch gekennzeichnet, dass**
das Hinterwagenmodul (20) mit der Karosserie (2) starr verbindbar ist.

19. Hinterwagenmodul nach einem der Ansprüche 14 bis 18,
**dadurch gekennzeichnet, dass**
die zumindest eine Tragstruktur (21a, 21b) und die zumindest eine Trägerstruktur (22a, 22b) je Fahrzeugseite in Fahrzeugquerrichtung (7) mittels zumindest einem Modulquerträger (27) miteinander verbunden sind.

20. Hinterwagenmodul nach einem der Ansprüche 14 bis 19,
**dadurch gekennzeichnet, dass**
das Hinterwagenmodul (20) einen wannenartige Bodenstruktur (25) aufweist, welche zur Aufnahme von bestimmten Zusatzaggregaten, z. B. eines Gastanks, Batterien oder Akkumulatoren, eines Reserverades, Steuergeräten oder Fahrzeugvarianten bildenden Ausrüstungen ausgebildet ist.

21. Hinterwagenmodul nach einem der Ansprüche 14 bis 20,
**dadurch gekennzeichnet, dass**
die Trägerstruktur (22a, 22b) als kastenförmiger oder rohrförmiger Träger nach Art eines Längsträgers ausgebildet ist.

22. Hinterwagenmodul nach einem der Ansprüche 14 bis 21,
**dadurch gekennzeichnet, dass**
die Trägerstruktur (22a, 22b) als schalenartiger Träger zur Aufnahme einer Gasflasche, diese umgreifend ausgebildet ist.

23. Hinterwagenmodul nach einem der Ansprüche 14 bis 22,
**dadurch gekennzeichnet, dass**
die Tragstruktur (21a, 21b) Aufnahmen (26) zur Befestigung von Fahrwerkskomponenten, insbesondere Fahrwerkslenkern, Stabilisatoren, Spurstangen, Federbinder- oder Dämpferelementen, Lenkungstellern oder aktiven Systemen zur Wankunterdrückung und Niveauregulierung aufweist.

24. Hinterwagenmodul nach einem der Ansprüche 14 bis 23,
**dadurch gekennzeichnet, dass**
die Tragstrukturen (22a, 22b) als Druckgussbauteile, insbesondere aus Aluminium oder einer Aluminiumlegierung ausgebildet sind.

25. Hinterwagenmodul nach einem der Ansprüche 14 bis 24,
**dadurch gekennzeichnet, dass**
das Hinterwagenmodul Einrichtungen zur Befestigung eines Hinterachsgetriebes aufweist.

## Claims

1. Motor vehicle with a vehicle body (2) which has at least two rear longitudinal beams (3a, 3b) forming respectively one primary load path for collision forces, wherein the motor vehicle (1) has a rear-end module (20) pre-mounted as a subassembly, which rear-end module can be connected with the vehicle body (2) after completion of the vehicle body shell in the context of the vehicle construction,
wherein the rear-end module (20) has per vehicle side at least one supporting structure (21a, 21b), for fastening chassis components of a rear wheel suspension, and a carrier structure (22a, 22b) extending from the supporting structure (21a, 21b) to the motor vehicle rear for absorbing collision forces, **characterised in that**
the supporting structure (21a, 21b) together with the carrier structure (22a, 22b) form per vehicle side at least one secondary load path for collision forces and the supporting structure (21a, 21b) is releasably connectable with a second carrier structure (29a, 29b), wherein the second carrier structure (29a, 29b) extends forwards in a drive direction (6) and at its front end portion (30a, 30b) is connected with a bottom structure (31) of a passenger compartment of the vehicle body (2) and the secondary load path is formed completed extending into the bottom structure (31) of the vehicle body (2).

2. Motor vehicle according to claim 1,
**characterised in that**
the at least one supporting structure (21a, 21b) and the at least one carrier structure (22a, 22b) per vehicle side are connected with one another in vehicle transverse direction (7) by means of at least one module transverse beam (27).

3. Motor vehicle according to claim 1 or 2,
**characterised in that**
the rear-end module (20) has a trough-like bottom structure (25) which is designed for the reception of predetermined auxiliary units, e.g. a petrol tank, batteries or accumulators, a spare wheel, control devices or equipment forming vehicle variants.

4. Motor vehicle according to any of the preceding claims,
**characterised in that**
the carrier structure (22a, 22b) is in the form of a box-shaped or pipe-shaped beam in the manner of a longitudinal beam.

5. Motor vehicle according to any of the preceding claims,
**characterised in that**
the carrier structure (22a, 22b) is in the form of a shell-like beam for the reception of a gas canister enclosing said gas canister.

6. Motor vehicle according to any of the preceding claims,
**characterised in that**
the supporting structures (21a, 21b) has receptacles (26) for the fastening of chassis components, in particular suspension links, stabilisers, track-rods, spring elements or damper elements, steering adjusters or active systems for suppression of rolling and level control.

7. Motor vehicle according to any of the preceding claims,
**characterised in that**
the supporting structures (22a, 22b) are formed as diecasting components, in particular of aluminium or an aluminium alloy.

8. Motor vehicle according to any of the preceding claims,
**characterised in that**
the rear-end module (20) is connected with the vehicle body (2) at least partially in a non-releasable manner, for example by means of an adhesive bonding.

9. Motor vehicle according to any of the preceding claims,
**characterised in that**
the rear-end module (20) has equipment for fastening a transaxle.

10. Motor vehicle according to any of the preceding claims,
**characterised in that**
the secondary load paths viewed in vehicle transverse direction (7) are disposed between the longitudinal beams (3a, 3b) of the vehicle body (2).

11. Motor vehicle according to any of the preceding claims,
**characterised in that**
the carrier structure (22a, 22b) viewed in a vehicle vertical direction (8) are disposed below the vehicle body longitudinal beams (3a, 3b) or at least displaced downwards with respect to the vehicle body longitudinal beams (3a, 3b).

12. Motor vehicle according to any of the preceding claims,
**characterised in that**
the supporting structure (21a, 21b) is connected by means of tension-compression struts (29a, 29b) with constituents of the primary load path e.g. the longitudinal beam (3a, 3b) or a side sill (10a, 10b) of the vehicle body (2).

13. Motor vehicle according to any of the preceding claims,
**characterised in that**
the rear-end module (20) is connected rigidly with the vehicle body (2).

14. Rear-end module for a vehicle body (2) of the motor-vehicle (1), in particular for forming a motor vehicle according to any of claims 1-15 the rear-end module (20) has per vehicle side a supporting structure (21a, 21b), for fastening chassis components of a rear wheel suspension, and a carrier structure (22a, 22b) extending from the supporting structure (21a, 21b) towards the motor-vehicle rear in the installed state of the rear-end module (20) in the vehicle body (2), wherein the supporting structure (21a, 21b) together with the carrier structure (22a, 22b) in the installed state form per vehicle side at least one load path for the reception and/or transmission of collision forces and the supporting structure (21a, 21b) can be releasably connected with a second carrier structure (29a, 29b), wherein the second carrier structure (29a, 29b) extends forwards in the direction of travel (6) and can be connected at its end portion (30a, 30b) with a bottom structure (31) of a passenger component of the vehicle body (2), wherein the load path can be completed as a secondary load path extending into the bottom structure (31) of the vehicle body (2).

15. Rear-end module according to claim 14,
**characterised in that**
the at least one load path in installed state of the rear-end module (20) viewed in vehicle transverse direction (7) can be disposed between the longitudinal beams (3a, 3b) of the vehicle body (2).

16. Rear-end module according to any of claims 14 or 15,
**characterised in that**
in the installed state of the rear-end module (20) the secondary load parts, in particular the carrier structure (22a, 22b) viewed in a vehicle vertical direction (8) can be disposed below the vehicle body longitudinal beams (3a, 3b) or at least displaced downwards with respect to the vehicle body longitudinal beams (3a, 3b).

17. Rear-end module according to any of claims 14 to 16,
**characterised in that**
the supporting structure (21a, 21b) of the rear-end module (20) can be connected in installed state by means of tension-compression struts (32a; 32b) with constituents of the primary load path, e.g. the longitudinal beam (3a, 3b) or a side sill (10a, 10b) of the vehicle body (2).

18. Rear-end module according to any of claims 14 to 17,
**characterised in that**
the rear-end module (20) can be rigidly connected with the vehicle body (2).

19. Rear-end module according to any of claims 14 to 18,
**characterised in that**
the at least one supporting structure (21a, 21b) and the at least one carrier structure (22a, 22b) per vehicle side are connected with one another in vehicle transverse direction (7) by means of at least one module transverse beam (27).

20. Rear-end module according to any of claims 14 to 19,
**characterised in that**
the rear-end module (20) has a trough-like bottom structure (25) which is designed for the reception of predetermined auxiliary units, e.g. a petrol tank, batteries or accumulators, a spare wheel, control devices or equipment forming vehicle variants.

21. Rear-end module according to any of claims 14 to 20,
**characterised in that**
the carrier structure (22a, 22b) is designed as a box-like or pipe-like beam in the manner of a longitudinal beam.

22. Rear-end module according to any of claims 14 to 21,
**characterised in that**
the carrier structure (22a, 22b) is in the form of a shell-like beam for the reception of a gas canister enclosing said gas canister.

23. Rear-end module according to any of claims 14 to 22,
**characterised in that**
the supporting structure (21a, 21b) has receptacles (26) for the fastening of chassis components, in particular suspension links, stabilisers, track-rods, spring connector elements or damper elements, steering adjusters or active systems for suppression of rolling and level control.

24. Rear-end module according to any of claims 14 to 23,
**characterised in that**
the supporting structures (22a, 22b) are formed as diecasting components, in particular of aluminium or an aluminium alloy.

25. Rear-end module according to any of claims 14 to 24,
**characterised in that**
the rear-end module has equipment for fastening a transaxle.

## Revendications

1. Véhicule automobile avec une carrosserie (2) qui présente au moins deux poutres longitudinales (3a, 3b) arrière, formant respectivement un cheminement des charges primaire pour des forces de collision, dans lequel le véhicule automobile (1) possède un module de caisse arrière (20) prémontable comme sous-ensemble qui peut être relié à la carrosserie (2) une fois le montage de la carrosserie terminé dans le cadre du montage de véhicule,
dans lequel le module de caisse arrière (20) présente par côté de véhicule au moins une structure de support (21a, 21b) pour la fixation de composants de mécanisme de roulement d'une suspension arrière de roue et une structure porteuse (22a, 22b) s'étendant de la structure de support (21a, 21b) vers l'arrière de véhicule automobile pour la réception de forces de collision, **caractérisé en ce que**
la structure de support (21a, 21b) forme conjointement avec la structure porteuse (22a, 22b) par côté de véhicule au moins un cheminement des charges secondaire pour des forces de collision et la structure de support (21a, 21b) peut être reliée de manière détachable à une seconde structure porteuse (29a, 29b), dans lequel la seconde structure porteuse (29a, 29b) s'étend dans un sens de roulement (6) vers l'avant et est reliée au niveau de sa zone d'extrémité avant (30a, 30b) à une structure de fond (31) d'un habitacle de la carrosserie (2) et le cheminement des charges secondaire est réalisé suffisamment complété jusque dans la structure de fond (31) de la carrosserie (2).

2. Véhicule automobile selon la revendication 1,
**caractérisé en ce que**
l'au moins une structure de support (21a, 21b) et l'au moins une structure porteuse (22a, 22b) sont reliées par côté de véhicule entre elles dans la direction transversale du véhicule (7) au moyen d'au moins une poutre transversale de module (27).

3. Véhicule automobile selon la revendication 1 ou 2,
**caractérisé en ce que**
le module de caisse arrière (20) présente une structure de fond (25) de type cuve qui est réalisée pour la réception de groupes supplémentaires prédéterminés, par exemple d'un réservoir de gaz, de batteries ou d'accumulateurs, d'une roue de secours, d'équipements formant des appareils de commande ou variantes de véhicule.

4. Véhicule automobile selon l'une quelconque des revendications précédentes,
**caractérisé en ce que**
la structure porteuse (22a, 22b) est réalisée comme support en forme de caisson ou de tube comme une poutre longitudinale.

5. Véhicule automobile selon l'une quelconque des revendications précédentes,
**caractérisé en ce que**
la structure porteuse (22a, 22b) est réalisée comme support de type coque pour la réception d'une bouteille de gaz l'entourant.

6. Véhicule automobile selon l'une quelconque des revendications précédentes,
**caractérisé en ce que**
les structures de support (21a, 21b) présente des logements (26) pour la fixation de composants de mécanisme de roulement, en particulier de bras de mécanisme de roulement, de stabilisateurs, de barres d'accouplement, d'éléments formant ressorts ou amortisseurs, d'actionneurs de direction ou de systèmes actifs pour la suppression du roulis et la régulation du niveau.

7. Véhicule automobile selon l'une quelconque des revendications précédentes,
**caractérisé en ce que**
les structures de support (22a, 22b) sont réalisées comme composants moulés sous pression, en particulier en aluminium ou un alliage d'aluminium.

8. Véhicule automobile selon l'une quelconque des revendications précédentes,
**caractérisé en ce que**
le module de caisse arrière (20) est relié à la carrosserie (2) au moins partiellement de manière non détachable, par exemple par un collage.

9. Véhicule automobile selon l'une quelconque des revendications précédentes,
**caractérisé en ce que**
le module de caisse arrière (20) présente des dispositifs pour la fixation d'un engrenage d'essieu arrière.

10. Véhicule automobile selon l'une quelconque des revendications précédentes,
**caractérisé en ce que**
les trajets de charge secondaire vu dans la direction transversale du véhicule (7) sont agencés entre les poutres longitudinales (3a, 3b) de la carrosserie (2).

11. Véhicule automobile selon l'une quelconque des revendications précédentes,
**caractérisé en ce que**
la structure porteuse (22a, 22b) vu dans un sens vertical de véhicule (8) est disposée en dessous de la poutre longitudinale de carrosserie (3a, 3b) ou décalée vers le bas au moins par rapport à la poutre longitudinale de véhicule (3a, 3b).

12. Véhicule automobile selon l'une quelconque des revendications précédentes,
**caractérisé en ce que**
la structure de support (21a, 21b) est reliée par des tirants/arcboutants (29a, 29b) aux composants du cheminement des charges primaire par exemple à la poutre longitudinale (3a, 3b) ou un seuil latéral (10a, 10b) de la carrosserie (2).

13. Véhicule automobile selon l'une quelconque des revendications précédentes,
**caractérisé en ce que**
le module de caisse arrière (20) est rigidement relié à la carrosserie (2).

14. Module de caisse arrière pour une carrosserie (2) d'un véhicule automobile (1), en particulier pour la réalisation d'un véhicule automobile selon l'une des revendications 1 à 15, le module de caisse arrière (20) présente par côté de véhicule une structure de support (21a, 21b) pour la fixation de composants de mécanisme de roulement d'une suspension de roue arrière et une structure porteuse (22a, 22b) s'étendant dans l'état d'intégration du module de caisse arrière (20) dans la carrosserie (2) de la structure de support (21a, 21b) vers l'arrière de véhicule automobile pour la réception de forces de collision, dans lequel la structure de support (21a, 21b) forme conjointement avec la structure porteuse (22a, 22b) dans l'état d'intégration par côté de véhicule au moins un cheminement des charges pour la réception et/ou la transmission de forces de collision et la structure de support (21a, 21b) peut être reliée de manière détachable à une seconde structure porteuse (29a, 29b), dans lequel la seconde structure porteuse (29a, 29b) s'étend dans le sens de roulement (6) vers l'avant et peut être reliée au niveau de sa zone d'extrémité (30a, 30b) à une structure de fond (31) d'un habitacle de la carrosserie (2), dans lequel le cheminement des charges peut être suffisamment complété comme cheminement des charges secondaire jusque dans le dessous de caisse de la carrosserie (2).

15. Module de caisse arrière selon la revendication 14,
**caractérisé en ce que**
l'au moins un cheminement des charges peut être agencé dans l'état intégré du module de caisse arrière (20) vu dans la direction transversale du véhicule (7) entre les poutres longitudinales (3a, 3b) de la carrosserie (2).

16. Module de caisse arrière selon l'une quelconque des revendications 14 ou 15,
**caractérisé en ce que**
dans l'état d'intégration du module de caisse arrière (20) les trajets de charge secondaire, en particulier la structure porteuse (22a, 22b) peut être agencée vu dans le sens vertical de véhicule (8) en dessous des poutres longitudinales de carrosserie (3a, 3b) ou décalée vers le bas au moins par rapport aux poutres longitudinales de carrosserie (3a, 3b).

17. Module de caisse arrière selon l'une quelconque des revendications 14 à 16,
**caractérisé en ce que**
la structure de support (21a, 21b) du module de caisse arrière (20) peut être reliée dans l'état d'intégration par des tirants/arcboutants (32a ; 32b) aux composants du cheminement des charges primaire, par exemple à la poutre longitudinale (3a, 3b) ou à un seuil latéral (10a, 10b) de la carrosserie (2).

18. Module de caisse arrière selon l'une quelconque des revendications 14 à 17,
**caractérisé en ce que**
le module de caisse arrière (20) peut être rigidement relié à la carrosserie (2).

19. Module de caisse arrière selon l'une quelconque des revendications 14 à 18,
**caractérisé en ce que**
l'au moins une structure de support (21a, 21b) et l'au moins une structure porteuse (22a, 22b) sont reliées entre elles par côté de véhicule dans la direction transversale du véhicule (7) au moyen d'au moins une poutre transversale de module (27).

20. Module de caisse arrière selon l'une quelconque des revendications 14 à 19,
**caractérisé en ce que**
le module de caisse arrière (20) présente une structure de fond (25) de type cuve qui est réalisée pour la réception de groupes supplémentaires déterminés par exemple d'un réservoir de gaz, de batteries ou d'accumulateurs, d'une roue de secours, d'équipements formant des appareils de commande ou variantes de véhicule.

21. Module de caisse arrière selon l'une quelconque des revendications 14 à 20,
**caractérisé en ce que**
la structure porteuse (22a, 22b) est réalisée comme support en forme de caisson ou de tube comme une poutre longitudinale.

22. Module de caisse arrière selon l'une quelconque des revendications 14 à 21,
**caractérisé en ce que**
la structure porteuse (22a, 22b) est réalisée comme support de type coque pour la réception d'une bouteille de gaz l'entourant.

23. Module de caisse arrière selon l'une quelconque des revendications 14 à 22,
**caractérisé en ce que**
la structure de support (21a, 21b) présente des logements (26) pour la fixation de composants de mécanisme de roulement, en particulier de bras de mécanisme de roulement, de stabilisateurs, de barres d'accouplement, d'éléments formant ressorts ou amortisseurs, d'actionneurs de direction ou de systèmes actifs pour la suppression du roulis et la régulation du niveau.

24. Module de caisse arrière selon l'une quelconque des revendications 14 à 23,
**caractérisé en ce que**
les structures de support (22a, 22b) sont réalisées comme composants moulés sous pression, en particulier en aluminium ou un alliage d'aluminium.

25. Module de caisse arrière selon l'une quelconque des revendications 14 à 24,
**caractérisé en ce que**
le module de caisse arrière présente des dispositifs pour la fixation d'un engrenage d'essieu arrière.
